Europäisches Patentamt

European Patent Office

Office européen des brevets

(11) Publication number: **0 384 606 B1**

# EUROPEAN PATENT SPECIFICATION

(45) Date of publication of patent specification: **12.04.95**  (51) Int. Cl.⁶: **B32B 15/08**, B65D 17/00

(21) Application number: **90301198.9**

(22) Date of filing: **06.02.90**

(54) **Metal/polymer laminates.**

(30) Priority: **17.02.89 GB 8903629**

(43) Date of publication of application:
**29.08.90 Bulletin 90/35**

(45) Publication of the grant of the patent:
**12.04.95 Bulletin 95/15**

(84) Designated Contracting States:
**DE ES FR NL**

(56) References cited:
**EP-A- 0 063 395**
**EP-A- 0 065 417**
**EP-A- 0 201 890**
**GB-A- 1 361 784**

(73) Proprietor: **CarnaudMetalbox plc**
**Woodside**
**Perry Wood Walk**
**Worcester WR5 1EO (GB)**

(72) Inventor: **Heyes, Peter John**
**12 Elswith Close,**
**Grove**
**Wantage,**
**Oxfordshire OX12 0BT (GB)**
Inventor: **White, Chris Henry**
**15 Brunel Crescent,**
**Grove**
**Wantage,**
**Oxfordshire 0X12 (GB)**
Inventor: **Singh, Harjap**
**5 Carlton Close,**
**Grove**
**Wantage,**
**Oxfordshire 0X12 0PU (GB)**

(74) Representative: **Sawers, Lawrence Peter et al**
**PAGE, WHITE & FARRER**
**54 Doughty Street**
**London WC1N 2LS (GB)**

Rank Xerox (UK) Business Services
(3.10/3.09/3.3.3)

EP 0 384 606 B1

## Description

This invention relates to metal/polymer laminates suitable for making can ends, and more particularly but not exclusively to can ends made of such laminates and having an openable flap which is pushed into the can to open a predefined aperture.

British Patent 1361784 (BHP) describes manufacture of a "push-in" can end from tinplate by first stamping a can end having a peripheral cover hook, a chuck wall depending from the cover hook, an annular reinforcing bead extending radially inwards from the chuck wall and a central panel supported by the reinforcing bead. A blister of material in the central panel is stretch formed to upstand from the plane of the central panel. A horseshoe-shaped cut is made within the blister to define a convex flap portion hingedly connected to the rest of the central panel. The convex flap portion is then flattened to spread its periphery into overlapped engagement with the panel margin around the aperture. An organic sealant, typically a polyvinylchloride plastisol, is applied to the overlapped joint between the flap and panel margin on the inside of the can end to make a seal.

British Patent 1435060 identifies the problem of applying a controlled amount of sealant to push-in can ends and provides an apparatus for the purpose. Hitherto can ends have been made from prelacquered tinplate, the lacquer film and sealant being chosen to achieve a bond between the lacquer surface of flap and panel, and the sealant. However, demands for improved container performance and ecological and economic pressures now encourage use of laminates of metal and a polymeric film. Whereas the PVC plastisol bonded adequately to prior art vinyl organosol lacquers, we have observed a tendency for it to peel off the polymeric film we now wish to use as interior surface coatings on can ends.

Accordingly this invention aims to provide extruded polymeric films having an outer receptor surface layer to which a sealing compound will adhere and inner bonding layers to bond with sheet metals commonly used in the can trade so that laminates of the coextruded film and sheet metal can be formed into can ends having sealing compound firmly bonded to the receptor surface layer.

In a first aspect this invention provides a laminate for manufacure of container components, comprising a sheet metal bonded to a multi layer polymeric film wherein:

the sheet metal is chosen from the group consisting of aluminium alloy, tinplate, electrochome coated steel and blackplate; and

the multilayer film comprises an outer layer of polymeric material and an inner layer of polymeric material which bonds the film to the sheet metal;

characterised in that the outer layer of polymeric material comprises a vinyl radical and is chosen from the group consisting of:

i) acid modified olefin-vinylacetate copolymer;

ii) maleic anhydride-vinylacetate-ethylene terpolymer,

iii) polyvinylidene chloride, and

iv) unplasticised polyvinyl chloride;

and said inner layer is chosen from a group consisting of:

acid modified olefin copolymer;

acid modified olefin-vinylacetate copolymer;

maleic anhydride-vinylacetate-ethylene terpolymer;

copolyester of terphthalic acid with ethylene glycol/cyclohexane dimethanol;

copolyester of terphthalic acid with ethylene glycol/diethylene glycol;

acid modified polyolefin; and

acid modified olefin-vinyl acetate-ethylene terpolymer.

In a first embodiment of the laminate the film comprises an outer layer of acid modified olefin-vinyl acetate copolymer or maleic anhydride-vinyl acetate-ethylene terpolymer, an intermediate layer of a polyolefin chosen from a group consisting of polyethylene, polypropylene and copolymers of ethylene and propylene; and an inner layer of acid modified polyolefin or acid modified olefin copolymer to bond the film to the sheet metal. The vinyl acetate content should be sufficient to enable interaction with the PVC, typically greater than 10%.

In a second embodiment of the laminate the film comprises an outer layer of acid modified olefin - vinyl acetate copolymer or maleic anhydride - vinyl acetate-ethylene terpolymer, an intermediate layer of polyolefin chosen from a group consisting of polyethylene, polypropylene and copolymers of ethylene and propylene and an inner layer of acid modified olefin-vinyl acetate copolymer or maleic anhydride-vinyl acetate-ethylene terpolymer to bond the film to the metal.

In a third embodiment of the laminate the film comprises an outer layer of polyvinylidene chloride, an intermediate layer of acid modified olefin-vinyl acetate copolymer or maleic anhydride-vinyl acetate-

2

ethylene terpolymer, an intermediate layer of a polyolefin chosen from a group consisting of polyethylene, polypropylene and copolymers of ethylene and propylene; and an inner layer of acid modified polyolefin or acid modified olefin copolymer. If desired this film includes a layer of isocyanate primer to secure the polyvinylidene chloride to the polyolefin intermediate layer. Additionally, the polyvinylidene chloride may be applied to a film of the first embodiment.

In a fourth embodiment of the laminate the film comprises only two layers, the outer layer of which is an unplasticised polyvinyl chloride (UPVC) and the bonding layer is an acid modified olefin-vinyl acetate copolymer or maleic anhydride-vinyl acetate-ethylene terpolymer or a copolyester such as a copolyester of terephthalic acid (TPA), ethylene glycol (EG) and cyclohexane dimethanol (CHDM) or TPA with EG and Diethylene glycol. The bonding resin may be extrusion coated on to the UPVC web, under appropriate conditions.

The UPVC film may be either unoriented or oriented longitudinally, transversely or both.

It is a feature of this invention that the film coating can be laminated simultaneously to both major surfaces of the metal sheet by a purely thermal lamination, involving no conventional solvent based adhesives or separate glues.

In a second aspect this invention provides a can end comprising a peripheral cover hook, an annular chuck wall depending from the interior of the cover hook, an annular portion of arcuate cross section extending radially inward from the chuck wall, and a central panel supported by the annular portion, when made from any of the laminates as defined above.

The can end may have an annulus of a polyvinyl chloride based lining compound adhered to the outer polymeric layer on the concave surface of the cover hook.

In one embodiment the can end has an aperture in the centre panel closed by a flap portion hingedly connecting with the rest of the panel, overlapping margins of said flap and aperture being sealed by a polyvinyl chloride based sealing material.

The lining compound or the sealing material may be applied to the can end as a plastisol of poly(vinyl chloride-vinyl acetate) copolymer.

Various embodiments will now be described by way of example and with reference to the accompanying drawings in which:-

Fig. 1 is a side view of a laminate of a sheet metal and a multi-layered coextruded film;

Fig. 2 is a perspective sketch of a can end sectioned on a diameter;

Fig. 3 is a perspective sketch of the underside of the can end of Fig. 2 after application of lining compound and sealant;

Fig. 4 is a sectioned side view of a three layer coextruded film;

Fig. 5 is a sectioned side view of a four layer, coated coextruded film; and

Fig. 6 is a like view of a two layer extruded film.

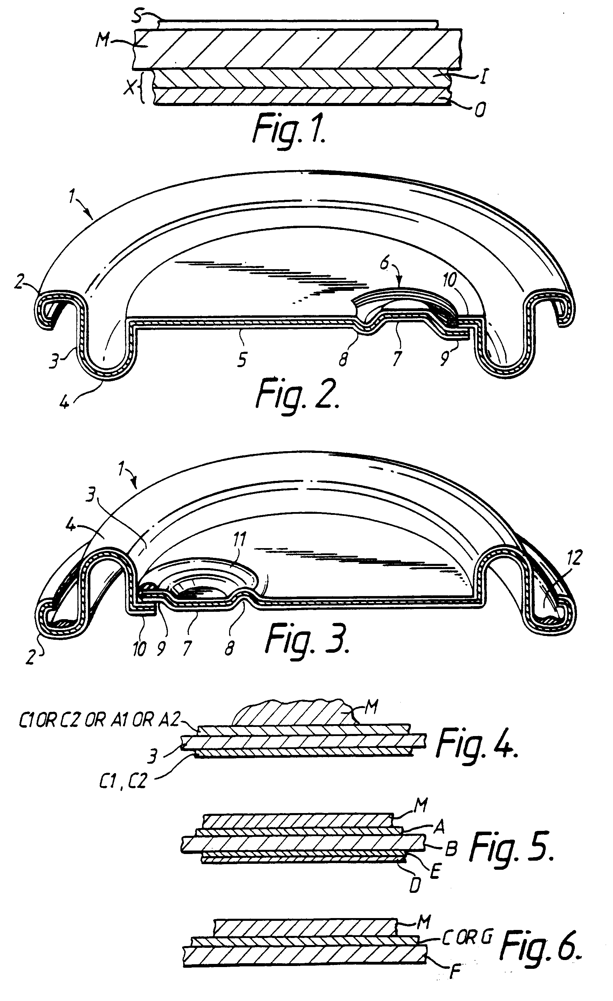

Fig. 1 shows a laminate for manufacture of can ends. The laminate comprises a sheet metal M bonded to an extruded, coated coextruded or coextruded film X which comprises an inner layer I of polymer firmly bonded to the metal and an outer layer 0 of polymeric material chosen for its ability to bond with lining compounds or sealant materials that comprise polyvinyl chloride. Additional intermediate layers may be included between the inner and outer layers as will be described later.

The laminate may also have a coating S, applied to the other side of the metal sheet M, in the form of lacquer or another preformed film of polymeric material. Such coatings serve to protect press tools from abrasion by electrochrome coated steels and thereafter prevent or reduce corrosion of the pressed article.

Fig. 2 shows a can end 1 stamped from a laminate according to the invention; for clarity the multi-layers of the extruded, coated coextruded or coextruded film on the underside of the can end are omitted. This can end comprises a cover hook 2, a chuck wall 3 depending from the interior of the cover hook 2, an annular portion 4 of arcuate cross section extending radially inward from the chuck wall, and a central panel 5 supported by the arcuate portion. In this example the arcuate cross section is semi-circular so defining a channel-shaped reinforcing bead such as is used for can ends used to close cans of carbonated beverage. However, an arcuate cross-section subtending 90°, such as is used on can ends for foods or general products, may also be made from the laminate.

In Fig. 2 an aperture 6 has been cut in the central panel. The aperture is closed by a convex flap portion 7, hingedly connected to the rest of the panel by a hinge portion 8. A peripheral margin 9 of the flap portion overlaps a complementary margin 10 around the aperture. Our problem was to provide a polymeric film and a sealant that would bond firmly together to seal the overlapped margins as shown in Fig. 3.

In Fig. 3 the sealant 11 has been applied to the coextruded polymeric film on the underside of the can end and bonded thereto in order to cover the overlapped margins but not the hinge portion 8. Using coextruded, composite extruded or coated coextruded films and sealants about to be described, the bond arising was so strong that the sealant is broken apart during opening of the flap without any evidence of peeling of the sealant from the film surface that would indicate uncertainty of sealing and a risk of microleakage.

In Fig. 3 it will be noticed that a lining compound 12 has been applied to the concave surface of the cover hook 2. Provided the lining compounds 12 and 11 have similar requirements for thermal curing, the lining compound and sealant may be applied and then cured simultaneously so avoiding the expense of separate thermal treatments.

Various compatible polymeric films and sealant are shown in Table 1 to permit comparison with known polypropylene or polyethylene terephthalate clad laminates that failed to adhere to a sealant applied in the form of a plastisol of polyvinylchloride.

The films are all suitable for thermal lamination to the base metal without any further adhesive system. The films can be simultaneously laminated to metal with a separate and in many cases different film, for example a coextruded copolyester-PET biaxially oriented film, on the opposite surface of the metal. The lamination process comprises:

1) Heating the uncoated metal strip (T1)

2) Applying film(s) to the heated metal using lamination rollers to exclude air and imperfections.

3) Reheating the laminate to produce a secure, permanent bond and condition the polymer structure (T2).

4) Quenching rapidly in a water curtain to preserve the appropriate polymer structure.

For polyefin based films of about 40 microns gauge, T1 is typically 160°C and T2 typically 250°C.

The following Table 1 sets out particulars of 20 examples of the invention, with reference letters referring to Figs 4 to 6, and comparative examples A,B & C. Table 2 sets out the results of tests of the adhesion between the examples of Table 1 and a PVC plastisol.

TABLE 1

| LAYER | COMPARATIVE A | COMPARATIVE B | COMPARATIVE C | 1,2,3,4 | 5,6,7,8 |
|---|---|---|---|---|---|
| 4 | | | | | |
| 3 | | | | Acid modified olefin vinyl acetate copolymer OR maleic anhydride vinyl acetate ethylene terpolymer C | Acid mofified olefin vinyl acetate copolymer OR maleic anhydride vinyl acetate ethylene terpolymer C |
| 2 | Polyethylene terephthalate | Polypropylene | | Polyolefin B | Polyolefin B |
| 1 | Copolyester | Acid modified polypropylene | Ethylene-vinyl acetate copolymer (5-10% VA) | Acid modified polyolefin OR acid modified olefin copolymer A | Acid modified olefin vinyl acetate copolymer OR maleic anhydride vinyl acetate ethylene copolymer C |
| METAL | ECCS | ECCS | ECCS | ECCS | ECCS |

EP 0 384 606 B1

TABLE 1 (Cont/d.)

| 9,10 | 11,12 | 13,14 | 15,16 | 17,18,19,20 |
|---|---|---|---|---|
| Polyvinylidene chloride<br><br>D | Polyvinylidene chloride<br><br>D | | | |
| Acid modified olefin vinyl acetate copolymer<br>OR<br>maleic anhydride vinyl acetate ethylene terpolymer<br>C | Isocyanate primer<br><br><br><br><br><br><br>E | | | unplasticised polyvinyl chloride film |
| Polyolefin<br><br><br><br>B | Polyolefin<br><br><br><br>B | Unplasticised polyvinyl chloride    -<br><br>F | Unplasticised polyvinyl chloride<br><br>F | primer, e.g. isocyanate, or chlorinated polyolefin |
| Acid modified polyolefin<br>OR<br>acid modified olefin copolymer<br><br><br><br><br><br>A | Acid modified polyolefin<br>OR<br>acid modified olefin copolymer<br><br><br><br><br><br>A | Acid modified olefin vinyl acetate copolymer<br>OR<br>maleic anhydride vinyl acetate ethylene terpolymer<br>C | Copolyester of e.g. TPA and EG/CHDM<br>OR<br>TPA and EG/DEG<br><br><br><br><br><br>G | acid modified polyolefin<br>OR<br>acid modified olefin copolymer |
| ECCS | ECCS | ECCS | ECCS | ECCS |

TABLE 2

| Adhesion between Examples and PVC Plastisols | |
| --- | --- |
| Example (from Table 1) | Adhesion to PVC Plastisol [a] |
| Comparative A | None |
| Comparative B | None |
| Comparative C | None |
| 1,2,3,4 | Moderate |
| 5,6,7,8 | Moderate |
| 9,10,11,12 | Good |
| 13,14,15,16 | Excellent (Not separable) |

a Test conditions: Plastisol applied to coated metal and heated in a circulating air box oven for 60 seconds at an oven setting of 200°C. The coated metal was removed and allowed to cool.

The adhesion was evaluated by peeling the plastisol away from the coated metal.

In Table 2 it will be noticed that all the extruded films, exhibiting improved bonding to a polyvinyl chloride sealant, have an outer surface layer which includes vinyl radical. However it is surprising that no adhesion was achieved to anlethylene vinyl acetate copolymer (comparative example C). The coextruded films fall into groups:-

Group 1: Examples 1 to 8 which comprise a three layer coextruded film shown in Fig. 4. Referring to Fig. 4 and Table 1 the coextruded structures comprise an outer layer of acid modified olefin-vinylacetate copolymer (C1) OR maleic anhydride-vinyl acetate - ethylene terpolymer, denoted (C2) in Fig. 4; an intermediate layer of polyolefin B; and an inner layer of material to bond the polyolefin to the metal and chosen from acid modified polyolefin A1, acid modified polyolefin copolymer A2, acid modified olefin-vinyl acetate copolymer C1 or maleic anhydride- vinyl acetate-ethylene terpolymer C2.

Group 2: Examples 9 and 10 comprise a four layer coextruded film, similar to that shown in Fig. 4, but made up of an outer layer of polyvinylidene chloride D, an intermediate layer as C1 or C2 in Group 1, Examples 1 to 8, an intermediate layer of polyolefin B, and an inner layer of acid modified polyolefin A1 or acid modified olefin copolymer A2. A modification of Examples 9 and 10 is made by inclusion of an isocyanate primer E between the polyvinylchloride layer D and the polyolefin B to make Examples 11 and 12 as shown in Fig. 5. The polyolefin is preferably corona treated to enhance adhesion to the primer and PVdC.

Group 3: Examples 13, 14, 15 and 16 comprise a two layer coextruded film as shown in Fig. 6 to comprise an outer layer of unplasticised polyvinyl chloride F and an inner layer of acid modified olefin-vinyl acetate copolymer C1 or maleic anhydride-vinyl acetate-ethylene terpolymer C2 or a copolyester G, for example a copolyester of terephthalic acid (TPA) with ethylene glycol (EG) and cyclohexane dimethanol (CHDM) or TPA with EG and Diethylene glycol (DEG). The UPVC film may be either oriented longitudinally, transversely or both by calendering or unoriented. Extrusion coating conditions should be chosen to prevent UPVC shrinkage as the extrudate contacts the UPVC film..

This two layer film can be manufactured by:

(i) extrusion coating the adhesive layer onto a premanufactured UPVC film;

(ii) coextruding the adhesive layer and UPVC film together; or

(iii) heat lamination of the adhesive film to a UPVC film.

Can ends, as shown in Fig. 3, were made by applying a sealant 11 in the form of a polyvinyl chloride plastisol to the receptor surface of the coextruded film and adhesion of gelled sealant to film surface was tested by pushing open the flap 7. In all cases the bond between the sealant and film surface was so strong that the sealant broke apart indicating a satisfactory bond. The adhesion of the plastisol to the laminated polymer film is influenced to some extent by its formulation and preferred components have been identified. The plastisol comprises;

1. Resin of polyvinyl chloride or a related copolymer

2. Plasticiser

3. Pigment

a. The use of poly(vinyl chloride-vinyl acetate) copolymers in the resin can improve adhesion of the plastisol to a thermoplastic film coating compared to polyvinyl chloride and leads to more efficient fluxing, hence a reduced thermal cycle in fluxing. A typical thermal cycle is one in which the plastisol

EP 0 384 606 B1

is gelled at 160°C to 190°C for 6 to 9 seconds.

b. Although di-iso octyl phthalate is commonly used, acetyl tributyl citrate is equally efficient and can lead to greater adhesion between plastisol and thermoplastic film coatings.

Particularly preferred variants of this invention are represented by examples 9, 11, 13 and 15 in the following Table 3 because of their relative ease of forming in can end making presses. The softer polymers in the outer layers of examples 1 and 5 can give rise to difficulty in releasing ends from the press tool. Particularly preferred polyvinylidene chloride materials have low surface tack properties, a high PVdC content typically over 85% and a relatively crystalline nature. These properties ensure the PVdC does not tack to the lamination rolls during lamination. Table 3 shows specific examples of films tested:-

| Example No. | Metal thickness (mm) | Inner layer thickness (micron) | Intermediate layer thickness (micron) | Other layer (micron) | Outer layer (micron) |
|---|---|---|---|---|---|
| Comparative A(*) | 0.30 | 3 | 12 | - | - |
| Comparative B(*) | 0.30 | 3 | 37 | - | - |
| Comparative C(*) | 0.30 | 50 | - | - | - |
| 1(*) | 0.30 | 3 | 34 | - | 3 |
| 5(*) | 0.30 | 3 | 34 | - | 3 |
| 9(*) | 0.30 | 3 | 34 | 3 | 5 |
| 11(*) | 0.30 | 3 | 37 | 1 | 5 |
| 13(*) | 0.30 | 10 | 40 | - | - |
| 15(*) | 0.30 | 10 | 35 | - | - |

\* Reference Table 1

**Claims**

1. A laminate for manufacture of container components, comprising a sheet metal bonded to a multi layer polymeric film wherein:

the sheet metal is chosen from the group consisting of aluminium alloy, tinplate, electrochome coated steel and blackplate; and

the multi layer film comprises an outer layer of polymeric material and an inner layer of polymeric material which bonds the film to the sheet metal;

characterised in that the outer layer of polymeric material comprises a vinyl radical and is chosen from the group consisting of:

i) acid modified olefin-vinylacetate copolymer;

ii) maleic anhydride-vinylacetate-ethylene terpolymer,

iii) polyvinylidene chloride, and

iv) unplasticised polyvinyl chloride;

and said inner layer is chosen from a group consisting of:

acid modified olefin copolymer;

acid modified olefin-vinylacetate copolymer;

maleic anhydride-vinylacetate-ethylene terpolymer;

copolyester of terephthalic acid with ethylene glycol/cyclohexane dimethanol;

copolyester of terephthalic acid with ethylene glycol/diethylene glycol;

acid modified polyolefin; and

acid modified olefin-vinyl acetate-ethylene terpolymer.

2. A laminate according to claim 1, wherein the film comprises an outer layer of acid modified olefin-vinyl acetate copolymer or maleic anhydride-vinyl acetate-ethylene terpolymer, an intermediate layer of a polyolefin chosen from a group consisting of polyethylene, polypropylene and copolymers of ethylene and propylene, and an inner layer of acid modified polyolefin or acid modified olefin copolymer to bond the film to the sheet metal.

3. A laminate according to claim 1, wherein the film comprises an outer layer of acid modified olefin - vinyl acetate copolymer or maleic anhydride - vinyl acetate-ethylene terpolymer, an intermediate layer of polyolefin chosen from a group consisting of polyethylene, polypropylene and copolymers of

8

ethylene and propylene, and an inner layer of acid modified olefin-vinyl acetate-ethylene terpolymer to bond the film to the metal.

4. A laminate according to claim 1, wherein the film comprises an outer layer of polyvinylidene chloride, an intermediate layer of acid modified olefin-vinyl acetate copolymer or maleic anhydride-vinyl acetate-ethylene terpolymer, an intermediate layer of a polyolefin chosen from a group consisting of polyethylene, polypropylene and copolymers of ethylene and propylene; and an inner layer of acid modified polyolefin or acid modified olefin copolymer.

5. A laminate according to claim 4 wherein the film further includes a layer of isocyanate primer to bond the polyvinylidene chloride to the polyolefin intermediate layer.

6. A laminate according to claim 1, wherein the film is a composite extrusion of only two layers, the outer layer of which is an unplasticised polyvinyl chloride and the inner layer is an acid modified olefin-vinyl acetate copolymer or maleic anhydride-vinyl acetate-ethylene terpolymer.

7. A laminate according to claim 1, wherein the outer layer of the film is an unplasticised polyvinyl chloride and the inner layer is a copolyester of terephthalic acid with ethylene glycol and cyclohexane dimethanol or terephthalic acid with ethylene glycol and diethylene glycol.

8. A can end (1) comprising a peripheral cover hook (2), an annular chuck wall (3) depending from the interior of the cover hook, an annular portion (4) of arcuate cross section extending radially inward from the chuck wall, and a central panel (5) supported by the annular portion, when made from the laminate of any preceding claim.

9. A can end (1) according to claim 8, wherein an annulus of a polyvinyl chloride based lining compound (12) is adhered to the outer polymeric layer on a concave surface of the cover hook (2).

10. A can end (1) according to claim 8 or claim 9, wherein an aperture in the central panel (5) is closed by a flap portion (7) hingedly connecting with the rest of the panel, overlapping margins (9,10) of said flap and aperture being sealed by a sealant (11) in the form of a polyvinyl chloride based lining compound.

11. A can end according to claim 9 or claim 10, wherein the polyvinyl chloride based lining compound (11,12) is applied to the can end as a plastisol of poly(vinyl chloride-vinyl acetate) copolymer.

12. A can end according to claim 11, wherein the plastisol includes di-iso octyl phthalate or acetyl tributyl citrate to flux the plastisol and enhance adhesion between the plastisol and the outer polymeric surface.

**Patentansprüche**

1. Laminat zur Herstellung von Behälterteilen, bestehend aus einem Blech, das an einer mehrschichtigen Polymerfolie gebunden ist, wobei:
   das Blech ausgewählt ist aus der Gruppe, die besteht aus Aluminiumlegierung, Weißblech, elektrochrombeschichtetem Stahl und Schwarzblech; und
   die mehrschichtige Folie eine äußere Schicht aus Polymermaterial und eine innere Schicht aus Polymermaterial aufweist, welche die Folie an dem Blech bindet;
   dadurch gekennzeichnet, daß die äußere Schicht aus Polymermaterial ein Vinylradikal aufweist und aus der Gruppe gewählt ist, die besteht aus:
       i) säure-modifiziertem Olefin-Vinylacetat-Copolymer;
       ii) Maleinsäureanhydrid-Vinylacetat-Ethylen-Terpolymer;
       iii) Polyvinylidenchlorid, und
       iv) unplastifiziertem Polyvinylchlorid;
   und daß die innere Schicht aus einer Gruppe gewählt ist, die besteht aus:
   säure-modifiziertem Olefin-Copolymer;
   säure-modifiziertem Olefin-Vinylacetat-Copolymer;
   Maleinsäureanhydrid-Vinylacetat-Ethylen-Terpolymer;
   Copolyester von Terephthalsäure mit Ethylenglykol/Cyclohexandimethanol;
   Copolyester von Terephthalsäure mit Ethylenglykol/Diethylenglykol;

9

säure-modifiziertem Polyolefin; und
säure-modifiziertem olefin-Vinylacetat-Ethylen-Terpolymer.

2. Laminat nach Anspruch 1, bei welchem die Folie eine äußere Schicht aus säure-modifiziertem Olefin-Vinylacetat-Copolymer oder Maleinsäureanhydrid-Vinylacetat-Ethylen-Terpolymer, eine Zwischenschicht aus einem Polyolefin, das aus einer Gruppe gewählt ist, die besteht aus Polyethylen, Polypropylen und Copolymeren von Ethylen und Propylen, und eine innere Schicht aus säure-modifiziertem Polyolefin oder säure-modifiziertem Olefin-Copolymer zur Bindung der Folie an dem Blech aufweist.

3. Laminat nach Anspruch 1, bei welchem die Folie eine äußere Schicht aus säure-modifiziertem Olefin-Vinylacetat-Copolymer oder Maleinsäureanhydrid-Vinylacetat-Ethylen-Terpolymer, eine Zwischenschicht aus Polyolefin, das aus einer Gruppe gewählt ist, welche aus Polyethylen, Polypropylen und Copolymeren von Ethylen und Propylen besteht, und eine innere Schicht aus säure-modifiziertem Olefin-Vinylacetat-Ethylen-Terpolymer zur Bindung der Folie an dem Metall aufweist.

4. Laminat nach Anspruch 1, bei welchem die Folie eine äußere Schicht aus Polyvinylidenchlorid, eine Zwischenschicht aus säure-modifiziertem Olefin-Vinylacetat-Copolymer oder Maleinsäureanhydrid-Vinylacetat-Ethylen-Terpolymer, eine Zwischenschicht aus einem Polyolefin, das aus einer Gruppe gewählt ist, welche aus Polyethylen, Polypropylen und Copolymeren von Ethylen und Propylen besteht; und eine innere Schicht aus säure-modifiziertem Polyolefin oder säure-modifiziertem Olefin-Copolymer aufweist.

5. Laminat nach Anspruch 4, bei welchem die Folie ferner eine Schicht aus Isocyanat-Grundierung zur Bindung des Polyvinylidenchlorids an der Polyolefin-Zwischenschicht aufweist.

6. Laminat nach Anspruch 1, bei welchem die Folie ein zusammengesetztes Extrudat von nur zwei Schichten ist, deren äußere Schicht ein unplastifiziertes Polyvinylchlorid und deren innere Schicht ein säure-modifiziertes Olefin-Vinylacetat-Copolymer oder Maleinsäureanhydrid-Vinylacetat-Ethylen-Terpolymer ist.

7. Laminat nach Anspruch 1, bei welchem die äußere Schicht der Folie ein unplastifiziertes Polyvinylchlorid und die innere Schicht ein Copolyester von Terephthalsäure mit Ethylenglycol und Cyclohexandimethanol oder Terephthalsäure mit Ethylenglycol und Diethylenglycol ist.

8. Dosendeckel (1), der aufweist einen um den Umfang laufenden Greif- oder Deckrand (2), eine ringförmige Spannwand (3), die von der Innenseite des Greifrandes nach unten steht, einen Ringteil (4) mit bogenförmigem Querschnitt, der sich von der Spannwand radial nach innen erstreckt, und eine Mittelplatte (5), die vom Ringteil getragen wird, hergestellt aus dem Laminat nach einem der vorangehenden Ansprüche.

9. Dosendeckel (1) nach Anspruch 8, bei welchem ein Ring aus einer Auskleidungsverbindung (12) auf Polyvinylchlorid-Basis an die äußere Polymerschicht einer konkaven Oberfläche des Greifrandes (2) angeklebt ist.

10. Dosendeckel (1) nach Anspruch 8 oder 9, bei welchem eine Öffnung in der Mittelplatte (5) durch einen Klappenteil (7) verschlossen ist, der durch eine Scharnierverbindung mit der übrigen Platte verbunden ist, wobei überlappende Ränder (9, 10) der Klappe und Öffnung durch ein Dichtungsmittel (11) in Form einer Auskleidungsverbindung auf Polyvinylchlorid-Basis abgedichtet sind.

11. Dosendeckel nach Anspruch 9 oder 10, bei welchem die Auskleidungsverbindung (11, 12) auf Polyvinylchlorid-Basis auf den Dosendeckel als Plastisol von Poly(Vinylchlorid-Vinylacetat)-Copolymer aufgebracht ist.

12. Dosendeckel nach Anspruch 11, bei welchem das Plastisol Diisooctylphthalat oder Acetyltributylcitrat zum Fließendmachen des Plastisols und zur Verbesserung der Adhäsion zwischen dem Plastisol und der äußeren Polymeroberfläche enthält.

**Revendications**

1. Stratifié pour la fabrication de composants pour conteneur, comprenant une feuille métallique collée sur un film polymère multicouche, dans lequel :

   la feuille métallique est choisie dans l'ensemble constitué par un alliage d'aluminium, le fer-blanc, l'acier électrochromé et la tôle noire ; et

   le film multicouche comprend une couche extérieure en matériau polymère et une couche intérieure en matériau polymère qui colle le film sur la feuille métallique ;

   caractérisé en ce que la couche extérieure de matériau polymère comprend un radical vinylique et est choisie dans l'ensemble constitué par :

   i) un copolymère d'oléfine modifiée avec un acide-acétate de vinyle ;

   ii) un terpolymère d'anhydride maléique-acétate de vinyle-éthylène ;

   iii) le chlorure de polyvinylidène ; et

   iv) le chlorure de polyvinyle non plastifié ;

   et ladite couche intérieure est choisie dans l'ensemble constitué par :  un copolymère oléfinique modifié avec un acide ;

   un copolymère d'oléfine modifiée avec un acide-acétate de vinyle ;

   un terpolymère d'anhydride maléique-acétate de vinyleéthylène ;

   un copolyester de l'acide téréphtalique avec l'éthylèneglycol/cyclohexanediméthanol ;

   un copolyester de l'acide téréphtalique avec l'éthylèneglycol/diéthylèneglycol ;

   une polyoléfine modifiée avec un acide ; et

   un terpolymère d'oléfine modifiée avec un acide-acétate de vinyle-éthylène.

2. Stratifié selon la revendication 1, dans lequel le film comprend une couche extérieure formée d'un copolymère d'oléfine modifiée avec un acide-acétate de vinyle ou d'un terpolymère d'anhydride maléique-acétate de vinyleéthylène, une couche intermédiaire formée d'une polyoléfine choisie dans l'ensemble constitué par le polyéthylène, le polypropylène et des copolymères d'éthylène et de propylène, et une couche intérieure formée d'une polyoléfine modifiée avec un acide ou d'un copolymère oléfinique modifié avec un acide, pour coller le film sur la feuille métallique.

3. Stratifié selon la revendication 1, dans lequel le film comprend une couche extérieure formée d'un copolymère d'oléfine modifiée avec un acide-acétate de vinyle ou d'un terpolymère d'anhydride maléique-acétate de vinyleéthylène, une couche intermédiaire formée d'une polyoléfine choisie dans l'ensemble constitué par le polyéthylène, le polypropylène et des copolymères d'éthylène et de propylène, et une couche intérieure formée d'un terpolymère d'oléfine modifiée avec un acide-acétate de vinyle-éthylène pour coller le film sur le métal.

4. Stratifié selon la revendication 1, dans lequel le film comprend une couche extérieure formée de chlorure de polyvinylidène, une couche intermédiaire formée d'un copolymère d'oléfine modifiée avec un acide-acétate de vinyle ou d'un terpolymère d'anhydride maléique-acétate de vinyle-éthylène, une couche intermédiaire fermée d'une polyoléfine choisie dans l'ensemble constitué par le polyéthylène, le polypropylène et des copolymères d'éthylène et de propylène, et une couche intérieure formée d'une polyoléfine modifiée avec un acide ou d'un copolymère oléfinique modifié avec un acide.

5. Stratifié selon la revendication 4, dans lequel le film contient, en outre, un apprêt à base d'isocyanate pour coller le chlorure de polyvinylidène sur la feuille intermédiaire de polyoléfine.

6. Stratifié selon la revendication 1, dans lequel le film est un composite d'extrusion de seulement deux couches, dont la couche extérieure est formée de chlorure de polyvinyle non plastifié, et la couche intérieure est formée d'un copolymère d'oléfine modifiée avec un acideacétate de vinyle ou d'un terpolymère d'anhydride maléiqueacétate de vinyle-éthylène.

7. Stratifié selon la revendication 1, dans lequel la couche extérieure du film est formée de chlorure de polyvinyle non plastifié, et la couche intérieure est formée d'un copolyester de l'acide téréphtalique avec l'éthylèneglycol et le cyclohexanediméthanol ou de l'acide téréphtalique avec l'éthylèneglycol et le diéthylèneglycol.

8. Extrémité de boîte métallique (1) comprenant un crochet de recouvrement (2), une paroi annulaire de serrage (3) dépendante de l'intérieur du crochet de recouvrement, une partie annulaire (4) à section transversale en forme d'arc, qui s'étend radialement vers l'intérieur à partir de la paroi de serrage, et une plaque centrale (5) supportée par la partie annulaire, quand elle est fabriquée à partir du stratifié selon l'une quelconque des revendications précédentes.

9. Extrémité de boîte métallique (1) selon la revendication 8, dans laquelle un anneau de cercle formé d'un composé de revêtement (12) à base de chlorure de polyvinyle est collé sur la couche polymère extérieure sur une surface concave du crochet de recouvrement (2).

10. Extrémité de boîte métallique (1) selon la revendication 8 ou la revendication 9, dans laquelle une ouverture située dans la plaque centrale (5) est fermée au moyen d'une partie en forme de clapet (7), qui est reliée par articulation au reste de la plaque, les bords chevauchants (9, 10) dudit clapet et de ladite ouverture étant scellés par un matériau d'étanchéité (11) sous la forme d'un composé de revêtement à base de chlorure de polyvinyle.

11. Extrémité de boîte métallique selon la revendication 9 ou la revendication 10, dans laquelle le composé de revêtement à base de chlorure de polyvinyle (11, 12) est appliqué sur l'extrémité de la boîte sous la forme d'un plastisol de copolymère de poly(chlorure de vinyle-acétate de vinyle).

12. Extrémité de boîte métallique selon la revendication 11, dans laquelle le plastisol contient du phtalate de diisooctyle ou du citrate d'acétyl-tributyle pour faire fondre le plastisol et renforcer l'adhérence entre le plastisol et la surface polymère extérieure.

Fig. 1.

Fig. 2.

Fig. 3.

C1 OR C2 OR A1 OR A2

Fig. 4.

Fig. 5.

Fig. 6.